# EUROPÄISCHE PATENTANMELDUNG

(11) **EP 4 741 719 A1**
(43) Veröffentlichungstag der Anmeldung: **13.05.2026**
(21) Anmeldenummer: 25209014.7
(22) Anmeldetag: 16.10.2025
(51) Int. Cl.: F24D 19/00, F24D 19/10, F24H 15/212, F24H 15/25, F24H 15/254, F24H 15/269, G01K 17/08

(54) **HEIZKOSTENVERTEILER, SYSTEM UND VERFAHREN ZUM BETRIEB EINES HEIZKOSTENVERTEILERS**

(30) Priorität: 12.11.2024 DE 102024132934
(71) Anmelder: ista SE, 45131 Essen (DE)
(72) Erfinder: Adick, Jörn, 44263 Dortmund (DE)
(74) Vertreter: Cohausz Hannig Borkowski Wißgott

(57) **Zusammenfassung**

Die Erfindung betrifft ein Verfahren zum Betrieb eines Heizkostenverteilers an einem durchströmten Heizkörper, der mit wenigstens einem am Heizkörper angeordneten Betriebsmittel eine Heizvorrichtung bildet, wobei mit dem Betriebsmittel deren Wärmeleistung verändert wird, wobei mit dem Heizkostenverteiler mittels wenigstens eines Temperatursensors Temperaturmesswerte erfasst werden, und in aufeinanderfolgenden Messintervallen daraus anhand eines im Heizkostenverteiler gespeicherten Regelwerks ein Zählfortschritt ermittelt und in einem Speicherbereich des Heizkostenverteilers akkumuliert und gespeichert wird, wobei mittels wenigstens einem am Heizkostenverteiler angeschlossenen und dem wenigstens einen Betriebsmittel zugeordneten Sensor in jedem Messintervall wenigstens eine Beobachtungsgröße erfasst wird, die einen Betriebszustand des dem Sensor zugeordneten Betriebsmittels repräsentiert, und ein Zustandswert durch diese gegeben ist oder daraus ermittelt wird, der den aktuellen Betriebszustand der Heizvorrichtung repräsentiert, und der Speicherbereich in mehrere Register unterteilt wird/ist, und in Abhängigkeit des im Messintervall vorliegenden Zustandswerts der im Messintervall ermittelte Zählfortschritt in einem von mehreren Registern des Heizkostenverteilers akkumuliert und gespeichert wird. Die Erfindung betrifft auch ein System und einen Heizkostenverteiler für dieses Verfahren.

## Beschreibung

Die Erfindung betrifft ein Verfahren zum Betrieb eines Heizkostenverteilers an einem von einem Heizmedium durchströmten Heizkörper, der mit wenigstens einem am Heizkörper angeordneten Betriebsmittel eine Heizvorrichtung bildet, wobei mit dem wenigstens einen Betriebsmittel die Wärmeleistung der Heizvorrichtung, insbesondere die Wärmeleistung des Heizkörpers der Heizvorrichtung, verändert wird, wobei mit dem Heizkostenverteiler mittels wenigstens eines Temperatursensors Temperaturmesswerte erfasst werden und in aufeinanderfolgenden Messintervallen aus dem wenigstens einen im Messintervall erfassten Temperaturmesswert, vorzugsweise aus allen Temperaturmesswerten, anhand eines im Heizkostenverteiler gespeicherten Regelwerks ein Zählfortschritt ermittelt und in einem Speicherbereich des Heizkostenverteilers akkumuliert und gespeichert wird.

Der vom Heizmedium durchströmte Heizkörper ist vorzugsweise so ausgebildet, dass dieser von einem flüssigen Heizmedium, z.B. Wasser, durchströmt wird, vorzugsweise, wobei das Heizmedium über einen Vorlaufanschluss in den Heizkörper einströmt und über einen Rücklaufanschluss aus dem Heizkörper ausströmt. Am Rücklaufanschluss hat somit das Heizmedium eine geringere Temperatur als am Vorlaufanschluss.

Bei der Erfassung der Temperaturmesswerte wird vorzugsweise so vorgegangen, dass mit einem einzigen Temperatursensor Temperaturmesswerte als Maß der Temperatur der Heizkörperoberfläche erfasst werden. Dies ist als Ein-Fühler-Messverfahren bekannt.

Alternativ wird vorzugsweise so vorgegangen, dass mit einem ersten Temperatursensor Temperaturmesswerte als Maß der Temperatur der Heizkörperoberfläche und mit einem zweiten Temperatursensor Temperaturmesswerte als Maß der Temperatur der Raumluft erfasst werden. Dies ist als Zwei-Fühler-Messverfahren bekannt.

Alternativ wird vorzugsweise so vorgegangen, dass mit wenigstens zwei Temperatursensoren, insbesondere einem für die Vorlauftemperatur und einem für die Rücklauftemperatur, ein Maß für die mittlere Heizmediumtemperatur des Heizkörpers und mit einem weiteren Temperatursensor Temperaturmesswerte als Maß für die Temperatur der Raumluft erfasst werden. Dies ist als Mehr-Fühler-Messverfahren bekannt.

Die Erfindung betrifft auch ein System mit einer Heizvorrichtung aus einem Heizkörper und einem Betriebsmittel, vorzugsweise einem elektrischen oder elektromechanischen Betriebsmittel, mit dem die Wärmeleistung der Heizvorrichtung, insbesondere des Heizkörpers der Heizvorrichtung, änderbar ist, und mit einem Heizkostenverteiler mit wenigstens einem Temperatursensors zur Erfassung von Temperaturmesswerten und mit einer Recheneinheit, mit der in aufeinanderfolgenden Messintervallen aus den erfassten Temperaturmesswerten anhand eines gespeicherten Regelwerks ein Zählfortschritt ermittelbar und in einem Speicherbereich des Heizkostenverteilers akkumulierbar und speicherbar ist.

Die Erfindung betrifft weiterhin auch einen Heizkostenverteiler umfassend wenigstens einen Temperatursensor zur Erfassung von Temperaturmesswerten und mit einer Recheneinheit mit der in aufeinanderfolgenden Messintervallen aus den erfassten Temperaturmesswerten anhand eines gespeicherten Regelwerks ein Zählfortschritt ermittelbar und in einem Speicherbereich des Heizkostenverteilers akkumulierbar und speicherbar ist.

In analoger Weise, wie zuvor zum Verfahren benannt, ist es beim System oder dem Heizkostenverteiler bevorzugt vorgesehen, dass mit einem einzigen Temperatursensor Temperaturmesswerte als Maß der Temperatur der Heizkörperoberfläche erfassbar sind, oder dass mit einem ersten Temperatursensor Temperaturmesswerte als Maß der Temperatur der Heizkörperoberfläche erfassbar sind und mit einem zweiten Temperatursensor Temperaturmesswerte als Maß der Temperatur der Raumluft erfassbar sind, oder dass mit wenigstens zwei Temperatursensoren, insbesondere einem für die Vorlauftemperatur und einem für die Rücklauftemperatur, ein Maß für die mittlere Heizmediumtemperatur des Heizkörpers erfassbar ist und mit einem weiteren Temperatursensor Temperaturmesswerte als Maß für die Temperatur der Raumluft erfassbar sind.

Diese zum Verfahren, dem System und dem Heizkostenverteiler zuvor genannten Messverfahren können bevorzugt auch bei der Erfindung zum Einsatz kommen.

Heizkörper, die mit einem weiteren, am Heizkörper angeordneten Betriebsmittel eine Heizvorrichtung bilden, sind im Stand der Technik bereits bekannt. Z.B. ist es bekannt in mit einem flüssigen Heizmedium durchflossenen Heizkörper zusätzlich elektrische Heizstäbe einzusetzen.

In einem solchen Fall bilden der Heizkörper und der wenigstens eine elektrische Heizstab eine Heizvorrichtung im Sinne der Erfindung.

Es ist weiterhin z.B. bekannt bei Heizkörpern durch den Einsatz eines Gebläses deren Konvektion zu unterstützen. In diesem Fall bilden der vorzugsweise mit einem flüssigen Heizmedium durchströmte Heizkörper und das wenigstens eine Gebläse eine Heizvorrichtung im Sinne der Erfindung.

Die letztgenannten Heizvorrichtungen finden immer mehr Verbreitung, insbesondere in Kombination mit einer Wärmepumpe als Wärmequelle, weil solche Heizkörper aufgrund der unterstützten Konvektion bereits bei vergleichsweise geringen Vorlauftemperaturen, wie sie zu einem effizienten Betrieb einer Wärmepumpe nötig sind, eine größere Wärmeabgabe aufweisen, als nicht mit einem Gebläse unterstützte Heizkörper. Eine solche Heizvorrichtung ist auch bevorzugter Gegenstand der Erfindung.

Ein Betriebsmittel, welches mit einem Heizkörper eine Heizvorrichtung bildet, kann jegliches Mittel sein, mit dem Einfluss genommen werden kann auf die Wärmeleistung der gebildeten Heizvorrichtung, insbesondere auf die Wärmeleistung des Heizkörpers der Heizvorrichtung, z.B. dadurch, dass die Wärmeleistung des Heizkörpers mit dem Betriebsmittel änderbar ist und/oder dadurch, dass das Betriebsmittel selbst eine Wärmeleistung bereitstellen kann.

Es ist weiterhin bekannt, an üblichen Heizkörpern sogenannte elektronische Heizkostenverteiler der eingangs genannten Art anzubringen, um ein Maß für die von dem Heizkörper abgegebene Wärmemenge erfassen zu können und mit den Wärmemengen anderer in einer Liegenschaft vorhandener Heizkörper vergleichen zu können, um so die gesamten Heizkosten einer Liegenschaft auf die jeweiligen Nutzer verteilen zu können.

Solche Heizkostenverteiler arbeiten, wie eingangs erwähnt, nach dem Einfühler-Prinzip, nach dem Zweifühler-Prinzip, oder nach dem Mehrfühler-Prinzip, was dem Fachmann allgemein bekannt. Die Funktionsweise und Anforderungen solcher Heizkostenverteiler ist in der Norm EN 834 reguliert, die als bekannt zu unterstellen ist.

Die genannten Messintervalle sind vorzugsweise zeitlich gleich lang, können aber auch zeitlich variierend sein.

Um einen Verbrauchsmesswert aus dem Zählfortschritt zu bilden, ist der Zählfortschritt mit einem Bewertungsfaktor zu multiplizieren, der für den jeweils genutzten Heizkörper spezifisch ist, wobei vorgesehen sein kann, dass der akkumulierte Inhalt des genannten Speicherbereichs dem unbewerteten Zählfortschritt oder auch dem bewerteten Zählfortschritt entsprechen kann. Der spezifische Bewertungsfaktor, insbesondere der spezifische Bewertungsfaktor für die Wärmeleistung des Heizkörpers, welcher als Kq bezeichnet wird, ist für normale Heizkörper, die nicht mit einem weiteren Betriebsmittel zusammenwirken, eine Konstante, die auf den unbewerteten Zählfortschritt als Faktor angewendet wird.

Bei Heizvorrichtungen, in denen ein Heizkörper, insbesondere ein mit einem flüssigen Heizmedium durchströmter Heizkörper mit einem weiteren Betriebsmittel zusammenwirkt, ergibt sich das Problem, dass die Wärmeleistung der gebildeten Heizvorrichtung, insbesondere zumindest des Heizkörpers der Heizvorrichtung, nicht konstant ist, sondern mit der Stärke der Zusammenwirkung variiert.

Heizkostenverteiler mit einem konstanten Bewertungsfaktor dürfen daher an solchen kombinierten Heizvorrichtungen nicht ohne Weiteres zur Anwendung kommen, um eine Konformität mit der DIN EN 834 nicht zu verlieren.

Es ist daher eine Aufgabe der Erfindung ein Verfahren und ein System der eingangs genannten Art und auch einen Heizkostenverteiler der eingangs genannten Art so weiterzubilden, dass die Erfassung von Zählfortschritten mittels eines Heizkostenverteilers auch dann möglich ist, wenn in der Heizvorrichtung ein Heizkörper und ein weiteres Betriebsmittel zusammenwirkend betrieben werden, insbesondere somit die Heizvorrichtung bei einer durch Vorlauf- und Rücklauftemperaturen vorbestimmten Betriebsbedingung, keine konstante Normheizleistung hat.

Diese Aufgabe wird im Verfahren dadurch gelöst, dass mittels wenigstens einem am Heizkostenverteiler angeschlossenen und dem wenigstens einen Betriebsmittel zugeordneten Sensor in jedem Messintervall, insbesondere wenigstens einmal, wenigstens eine Beobachtungsgröße erfasst wird, wobei die jeweilige Beobachtungsgröße einen Betriebszustand des dem Sensor zugeordneten Betriebsmittels repräsentiert, und dass ein Zustandswert durch die wenigstens eine Beobachtungsgröße gegeben ist oder aus der wenigstens einen Beobachtungsgröße ermittelt wird, welcher den aktuellen Betriebszustand der Heizvorrichtung, insbesondere deren Wärmeleistung, repräsentiert, und dass der Speicherbereich im Heizkostenverteiler in mehrere Register unterteilt wird oder unterteilt ist, und in Abhängigkeit des im Messintervall vorliegenden Zustandswerts der im Messintervall ermittelte Zählfortschritt in einem von mehreren Registern des Heizkostenverteilers akkumuliert und gespeichert wird.

Beim System wird die Aufgabe dadurch gelöst, dass am Heizkostenverteiler wenigstens ein Sensor angeschlossen ist, der dem wenigstens einen Betriebsmittel zugeordnet ist mit dem in jedem Messintervall, insbesondere wenigstens einmal, eine Beobachtungsgröße erfassbar ist, die den Betriebszustand des zugeordneten Betriebsmittels repräsentiert, und der Heizkostenverteiler eingerichtet ist, die erfasste Beobachtungsgröße als einen Zustandswert zu übernehmen oder aus der Beobachtungsgröße einen Zustandswert zu bilden, welcher den aktuellen Betriebszustand der Heizvorrichtung, insbesondere deren Wärmeleistung, repräsentiert, und der Heizkostenverteiler eingerichtet ist in Abhängigkeit des im Messintervall ermittelten Zustandswerts den im Messintervall erfassten Zählfortschritt in einem von mehreren im Speicherbereich angelegten oder anlegbaren Registern zu speichern.

Beim Heizkostenverteiler wird die Aufgabe dadurch gelöst, dass der Heizkostenverteiler wenigstens einen Sensoranschluss aufweist, an den ein Sensor angeschlossen oder zumindest anschließbar ist, mit dem in jedem Messintervall eine Beobachtungsgröße eines dem Sensor zuordenbaren Betriebsmittels erfassbar ist, die den Betriebszustand des Betriebsmittels repräsentiert, und der Heizkostenverteiler eingerichtet ist, die erfasste Beobachtungsgröße als einen Zustandswert zu übernehmen oder aus der Beobachtungsgröße einen Zustandswert zu bilden, insbesondere welcher den aktuellen Betriebszustand eines Systems repräsentiert, welches mit dem Heizkostenverteiler, einem Heizkörper und wenigstens einem dem Heizkörper zugeordneten Betriebsmittels bildbar ist, und im Speicherbereich des Heizkostenverteilers eine Mehrzahl von Registern eingerichtet oder zumindest einrichtbar ist, und der Heizkostenverteiler eingerichtet ist bei vorliegenden verschiedenen Zustandswerten den im Messintervall erfassten Zählfortschritt in Abhängigkeit des im Messintervall erfassten Zustandswertes in unterschiedlichen Registern zu speichern.

Wenn das Betriebsmittel selbst keine Wärmeleistung bereitstellt, so ist der mit dem Zustandswert repräsentierte Betriebszustand der Heizvorrichtung gleichzusetzten mit dem Betriebszustand des Heizkörpers, insbesondere dessen Wärmeleistung.

Vorzugsweise ist bei mehreren am Heizkörper vorgesehenen Betriebsmitteln für jedes Betriebsmittel wenigstens ein eigener Sensor vorgesehen. Insbesondere wird es somit bei mehreren Betriebsmitteln an demselben Heizkörper auch mehrere Beobachtungsgrößen geben, insbesondere eine pro Betriebsmittel.

Eine solche Beobachtungsgröße bzw. der damit repräsentierte Betriebszustand des Betriebsmittels kann vorzugsweise repräsentieren, z.B. durch Zuordnung, welches Maß der Änderung der Wärmeleistung der Heizvorrichtung, insbesondere des Heizkörpers und/oder des jeweiligen Betriebsmittels in der Heizvorrichtung, damit korrespondiert.

Ist z.B. nur eine einzige Beobachtungsgröße von einem einzigen Betriebsmittel erfasst, weil eine Änderung der Wärmeleistung der Heizvorrichtung, insbesondere von deren Heizkörper und/oder deren Betriebsmittel, nur durch ein einziges Betriebsmittel bewirkt wird, so kann der Zustandswert, der den Betriebszustand der Heizvorrichtung repräsentiert, direkt durch die Beobachtungsgröße repräsentiert werden, insbesondere aus dieser gebildet werden.

Werden hingegen mehrere Beobachtungsgrößen erfasst, so kann es z.B. vorgesehen sein, dass jede Beobachtungsgröße (z.B. durch Zuordnung) ein Maß der Änderung der Wärmeleistung der Heizvorrichtung, insbesondere des Heizkörpers und/oder des jeweiligen Betriebsmittels repräsentiert, welche vom zugeordneten Betriebsmittel erzeugt wird. Ein Gesamtmaß der Änderung der Wärmeleistung der Heizvorrichtung durch alle zusammenwirkenden Betriebsmittel kann dann z.B. repräsentiert sein durch einen funktionalen Zusammenhang, in den alle Beobachtungsgrößen eingehen, z.B. durch die Summe aller von den einzelnen Beobachtungsgrößen repräsentierten Maße. Der Zustandswert der Heizvorrichtung kann in diesem Fall vom Gesamtmaß repräsentiert werden, insbesondere aus diesem gebildet werden.

Der repräsentierte Betriebszustand der Heizvorrichtung kann z.B. die aktuelle tatsächliche Wärmeleistung der Heizvorrichtung sein, insbesondere die aktuelle tatsächliche Wärmeleistung von dem Heizkörper der Heizvorrichtung.

Unabhängig davon, dass der repräsentierte Betriebszustand die tatsächliche aktuelle Wärmeleistung sein kann, muss der akkumulierte Zählfortschritt nicht zwingend eine akkumulierte Wärmeleistung sein, wenngleich dies in einer Ausführungsvariante auch möglich ist. Die akkumulierte Wärmeleistung kann z.B. auch nur abhängig sein vom akkumulierten Zählfortschritt, sich z.B. durch Multiplikation mit einem Bewertungsfaktor aus dem akkumulierten Zählfortschritt ergeben.

Die erfindungsgemäße Maßnahme, den im Messintervall erfassten Zählfortschritt in Abhängigkeit des im Messintervall erfassten Zustandswertes in unterschiedlichen Registern zu speichern, kann es vorsehen, jedem möglichen Zustandswert ein eigenes Register zuzuordnen, in welches akkumuliert und gespeichert wird.

Im Vergleich zum Stand der Technik wird erfindungsgemäß nicht nur in einem Register der Zählfortschritt des Heizkostenverteilers erfasst, sondern in mehreren Registern, vorzugsweise in einer Anzahl von Registern, die der Anzahl möglicher Zustandswerte und somit möglicher verschiedener Betriebszustände der Heizvorrichtung entspricht.

So wird sichergestellt, dass Zählfortschritte bei unterschiedlichen Betriebszuständen der Heizvorrichtung, z.B. bei unterschiedlicher Zusammenwirkung von Betriebsmittel und Heizkörper, nicht in einem Register akkumuliert werden, sondern dass in einem jeweiligen Register nur solche Zählfortschritte akkumuliert werden, die zu demselben Betriebszustand der Heizvorrichtung erfasst werden.

Vorzugsweise wird für jeden möglichen von mehreren diskreten Betriebszuständen der Heizvorrichtung der Zählfortschritt in einem eigenen Register akkumuliert. Jedes Register ist somit einem anderen Betriebszustand der Heizvorrichtung, insbesondere von deren Heizkörper, zugeordnet.

Unterschiedliche Betriebszustände der Heizvorrichtung unterscheiden sich in einer bevorzugten Ausführung der Erfindung nur durch unterschiedliche Betriebszustände des mit dem Heizkörper zusammenwirkenden Betriebsmittels, insbesondere dann, wenn das Betriebsmittel selbst keine Wärmeleistung aufweist oder gegenüber dem Heizkörper nur eine vernachlässigbare Wärmeleistung aufweist. Die Wärmeleistung eines Betriebsmittels ist vorzugsweise zumindest dann vernachlässigbar gegenüber der Wärmeleistung des Heizkörpers, wenn diese mindestens 100-mal kleiner ist als die des Heizkörpers. In diesem Fall repräsentiert vorzugsweise der Zustandswert verschiedene Betriebszustände der Heizvorrichtung, insbesondere der Wärmeleistung vom Heizkörper der Heizvorrichtung, die bei konstantem Betriebszustand des Heizkörpers (insbesondere hinsichtlich Vorlauf- und Rücklauftemperatur) durch unterschiedliche Betriebszustände des Betriebsmittels einstellbar sind.

Die Erfindung erschließt es somit, das Messprinzip von Heizkostenverteilern selbst dann zur Anwendung zu bringen, wenn die normgemäßen Betriebsvoraussetzungen für den Heizkostenverteiler eigentlich nicht vorliegen, weil die Erfindung es schafft, variable Betriebszustände zu diskretisieren und in jedem diskreten Betriebszustand normgemäß mit einem Heizkostenverteiler zu arbeiten, wobei die Zählfortschritte entsprechend den disktreten Betriebszuständen unterschieden werden und aufgrund der Speicherung in verschiedenen Registern auch unterscheidbar bleiben, z.B. für spätere Abrechnungszwecke.

Die Erfindung sieht es vorzugsweise vor, dass der Zustandswert aus der wenigstens einen Beobachtungsgröße in Verbindung mit wenigstens einem im Messintervall vom Heizkostenverteiler erfassten Temperaturmesswert gebildet wird. Es besteht so die Möglichkeit, eine Temperaturabhängigkeit der Beobachtungsgröße bei der Bildung des Zustandswertes zu berücksichtigen.

Innerhalb eines Messintervalls, welches zur Bestimmung des Zählfortschritts im Heizkostenverteiler dient, wird wenigstens einmalig die wenigstens eine Zustandsgröße bestimmt, insbesondere durch Bestimmung der Beobachtungsgröße, z.B. als Messwert des Sensors, um anhand des ermittelten Zustandswerts festzulegen, in welchem der mehreren Register der Zählfortschritt dieses Messintervalls akkumuliert wird. Es kann auch vorgesehen sein, innerhalb eines Messintervalls mehrmals den Zustandswert zu ermitteln, z.B. wenn die Möglichkeit in Betracht gezogen werden soll, dass sich innerhalb eines Messintervalls der Betriebszustand der Heizvorrichtung ändern könnte, z.B. durch Änderung des Betriebszustandes des Betriebsmittels.

Bevorzugte Messintervalle liegen im Bereich kleiner 10 Minuten, insbesondere im Bereich von 4 bis 6 Minuten. Bei so gewählten Messintervallen reicht eine einzige Ermittlung des Zustandswertes, insbesondere durch Messung der Beobachtungsgröße im Regelfall aus.

Insbesondere wenn es vorgesehen ist, innerhalb eines Messintervalls wenigstens zweimal den Zustandswert zu ermitteln, insbesondere durch wenigstens zweimalige Erfassung einer Beobachtungsgröße, ist es vorzugsweise vorgesehen, bei Änderung des Zustandswertes innerhalb des Messintervalls, insbesondere bei Änderung des Zustandswertes über ein vorbestimmtes Mindestmaß hinaus, das aktuelle Messintervall des Heizkostenverteilers abzuschließen und ein neues zu beginnen, oder aus allen innerhalb des Messintervalls ermittelten Zustandswerten einen für das gesamte Messintervall geltenden einzigen Zustandswert zu bilden. Z.B. kann dies erfolgen durch Bildung eines Mittelwerts aus allen innerhalb des Messintervalls ermittelten Zustandswerten.

Insbesondere sofern es durch einen Mittelwert von Zustandswerten keine eindeutige Zuordnung zu einem Register gibt, z.B. weil ein Mittelwert zwischen real existierenden Zustandswerten liegt, kann die Erfindung vorzugsweise vorsehen in dasjenige Register zu akkumulieren und zu speichern, dessen zugeordneter Zustandswert am nächsten am Mittelwert liegt. Allgemein kann es die Erfindung vorsehen einen Mittelwert aus mehreren Zustandswerten abzubilden, insbesondere durch eine Abbildungsfunktion, auf einen real existierenden Zustandswert, wie z.B. zuvor genannt auf den am nächsten am Mittelwert liegenden realen Zustandswert.

Eine solche Abbildungsfunktion kann z.B. die mathematische Rundung sein oder die Ganzzahlbildung unter Streichung von Nachkommastellen.

In einer bevorzugten Ausführung der Erfindung ist ein Betriebsmittel gebildet durch eine Vorrichtung, mit welcher der durch und/oder an dem Heizkörper vorbei geführte Luftmassenstrom änderbar ist. Eine solche Vorrichtung umfasst vorzugsweise wenigstens ein Gebläse und/oder wenigstens ein den Strömungswiderstand des Luftmassenstroms beeinflussendes Element, z.B. wenigstens einer Klappe.

Bei der Ausführung des Betriebsmittels als Gebläse kann dieses eine Gebläseeinheit oder auch mehrere Gebläseeinheiten, insbesondere einzelne Ventilatoren bzw. Lüfter umfassen.

In einer anderen Ausführung der Erfindung ist ein Betriebsmittel gebildet durch eine Vorrichtung, mit welcher die Temperatur des im Heizkörper befindlichen Heizmediums änderbar ist. Eine solche Vorrichtung ist z.B. ein in den Heizkörper eingebautes elektrisch betriebenes Heizelement, vorzugsweise eine Heizpatrone oder ein Heizstab.

In einer anderen Ausführung der Erfindung ist ein Betriebsmittel gebildet durch eine Vorrichtung, mit welcher die Temperatur der durch und/oder an dem Heizkörper vorbei geführten Luft änderbar ist. Eine solche Vorrichtung kann z.B. durch ein elektrisch betriebenes Luftheizungselement, vorzugsweise ein Heizregister, gebildet sein.

Eine Zusatzbeheizung der Luft ist mit einem normal betriebenen Heizkostenverteiler alleinig nicht registrierbar, weil sich diese nicht auf die Temperatur des Heizkörpers auswirkt, erfindungsgemäß wird aber durch Zählen in einem anderen Register nach Feststellung eines solchen geänderten Betriebszustandes der gesamten Heizvorrichtung der Energieverbrauch durch die Zusatz-Luftheizung trotzdem erfassbar.

Die vorgenannten verschiedenen Ausführungen der Vorrichtungen, die ein Betriebsmittel bilden können, können bei der Erfindung alternativ, aber auch kumulativ eingesetzt werden.

Bei der Erfindung ist es vorzugsweise vorgesehen, insbesondere in Abhängigkeit vom eingesetzten Betriebsmittel, dass mit dem wenigstens einen Sensor als Beobachtungsgröße ein elektrischer Betriebsparameter des Betriebsmittels, vorzugsweise ein die elektrische Leistungsaufnahme des Betriebsmittels, z.B. eines Gebläses, repräsentierender Messwert erfasst wird.

Hier ist nur wesentlich, dass der Messwert die elektrische Leistungsaufnahme repräsentiert, nicht aber, dass er der Leistungsaufnahme entspricht, was aber auch möglich ist.

So kann der die elektrische Leistungsaufnahme repräsentierende Messwert zwar vorzugsweise ein Leistungsmesswert sein, alternativ aber z.B. auch ein Wert, aus dem sich, z.B. in Verbindung mit anderen Werten, die Leistungsaufnahme ermitteln lässt. Z.B. kann der Messwert ein Strommesswert sein, insbesondere wenn die Spannung konstant ist, weil aus dem Strommesswert in Verbindung mit der Spannung, vorzugsweise bei Wechselstrom auch in Verbindung mit dem Phasenwinkel, die Leistung bestimmbar ist. Auch ein Drehzahlmesswert eines Betriebsmittels kann einen die elektrische Leistungsaufnahme repräsentierender Messwert sein. Die Erfindung kann vorsehen, aus dem die elektrische Leistung repräsentierenden Messwert ein Maß für die elektrische Leistung zu bestimmen, dies ist aber nicht zwingend nötig.

Die vorgenannte Beobachtungsgröße wird vorzugsweise genutzt bei Betriebsmitteln, deren Betriebszustände sich bei verschiedenen elektrischen Leistungen unterscheiden, wie es z.B. bei Gebläsen, bei elektrisch betriebenen Heizelementen oder Pumpen der Fall ist.

Bei einem Gebläse als Betriebsmittel können sich unterschiedliche elektrische Leistungen z.B. so ergeben, dass das Gebläse, insbesondere mehrere Gebläseeinheiten gleichzeitig, mit unterschiedlichen Drehzahlen betrieben werden können, wobei jede von mehreren schaltbaren Drehzahlen einer Leistungsstufe entsprechen kann. Es kann auch vorgesehen sein, bei mehreren Gebläseeinheiten in einem Gebläse die möglichen Leistungsstufen entsprechend der Anzahl der aktuell betriebenen Gebläseeinheiten von allen Gebläseeinheiten zu unterschieden. Bei N Gebläseeinheiten ergäben sich so N Leistungsstufen, die sich jeweils um die Leistung einer Gebläseeinheit unterscheiden.

Bei einem Gebläse als Betriebsmittel kann es auch vorgesehen sein, dass dessen Leistung stufenlos / kontinuierlich regelbar ist, z.B. in Abhängigkeit der Temperatur der geförderten Luft, insbesondere um die Wärmeleistung des Heizkörpers stufenlos/kontinuierlich beeinflussen zu können. Die Erfindung kann dann vorzugsweise vorsehen, aus der ebenso stufenlos / kontinuierlich erfassten Beobachtungsgröße einen diskreten Zustandswert zu bilden.

Bei der Erfindung ist es in anderer Ausführung vorzugsweise vorgesehen, insbesondere in Abhängigkeit vom eingesetzten Betriebsmittel, dass mit dem wenigstens einen Sensor als Beobachtungsgröße ein den Massenstrom der Luft oder des Heizmediums repräsentierender Messwert erfasst wird.

Bei der Erfindung ist es in anderer Ausführung vorzugsweise vorgesehen, insbesondere in Abhängigkeit vom eingesetzten Betriebsmittel, dass ein eine mechanische Position eines Stellelements (z.B. Klappe) des Betriebsmittels repräsentierender Messwert erfasst wird.

Die vorgenannten Ausführungen von Beobachtungsgrößen sind alternativ aber auch kumulativ einsetzbar, insbesondere wenn mehrere verschiedene Betriebsmittel gleichzeitig in Verbindung mit einem Heizkörper eingesetzt werden.

Insbesondere wenn als Beobachtungsgröße ein elektrischer Betriebsparameter des Betriebsmittels erfasst wird, z.B. ein die elektrische Leistungsaufnahme repräsentierender Messwert erfasst wird, sieht es die Erfindung vorzugsweise vor, dass der Sensor eine Steckdose oder eine Kombination aus einem Stecker und einer Steckdose aufweist.

Vorzugsweise ist dabei vorgesehen, dass der genannte Sensor in einem eine Steckdose aufweisenden Stecker angeordnet ist, insbesondere wobei der Stecker in eine Wandsteckdose einsteckbar ist und in die Steckdose des Steckers eine Versorgungsleitung des Betriebsmittels, z.B. eines Gebläses, einsteckbar ist. So kann auf sehr einfache Weise mit dem Sensor im Stecker die Leistungsaufnahme oder ein diese repräsentierender Messwert (z.B. der Strom) des an das Stromnetz angeschlossenen Betriebsmittels erfasst werden. Stecker und Steckdose können dabei je nach Länderanforderungen ausgebildet sein, z.B. als sogenannte Schuko-Stecker und -Dose.

Vorzugsweise sind das Betriebsmittel und der zugeordnete Sensor kapazitiv, induktiv oder galvanisch verbunden.

Der Sensor ist vorzugsweise kabelgebunden oder auch drahtlos mit dem Sensoranschluss des Heizkostenverteilers verbunden. Im ersten Fall ist der Sensoranschluss vorzugsweise eine elektrische Schnittstelle, im zweiten Fall vorzugsweise eine Kommunikationsschnittstelle.

In einer möglichen Ausführung des Verfahrens sieht es die Erfindung vor, dass in dem Zählfortschritt des Heizkostenverteilers der Energieverbrauch aus derjenigen Primärenergiequelle erfasst wird, mit welcher das Heizmedium des Heizkörpers erwärmt wird und weiterhin auch der Energieverbrauch aus derjenigen Primärenergiequelle erfasst wird, mit welcher die Änderung der Wärmeleistung mittels des wenigstens einen Betriebsmittels bewirkt wird.

Dies wird bei normalen Heizkostenverteilern vermieden. Z.B. dürfen an Badezimmerheizungen mit zusätzlicher elektrischer Heizpatrone keine Heizkostenverteiler montiert werden, sondern solche Heizungen werden im Verbrauch geschätzt, um zu vermeiden, dass der Heizkostenverteiler auch den Stromverbrauch mitzählt. Bei der Erfindung hingegen ist dies möglich.

Die beiden genannten Primärenergiequellen können dieselbe sein oder auch unterschiedlich sein.

Vorzugsweise kann es demnach hier vorgesehen sein, dass die Temperierung des den Heizkörper durchströmenden Heizmediums durch eine erste Primärenergiequelle erfolgt und die Änderung der Wärmeleistung der Heizvorrichtung mittels des wenigstens einen Betriebsmittels durch dieselbe erste Primärenergiequelle erfolgt.

Dies kann z.B. vorgesehen sein, wenn die Temperierung des Heizmediums über Strom mittels einer Wärmepumpe erfolgt und ebenfalls durch Bestromung des Betriebsmittels die Wärmeleistung geändert wird. Wenn der die Wärmeleistung ändernde Strom z.B. eine aktive Beheizung der Luft oder des Heizmediums erzeugt, so kann mit der Erfindung dieser zusätzliche Energieaufwand im HKV mitgezählt und, z.B. mit einem registerabhängigen Verteilschlüssel, auf die Nutzer einer Liegenschaft umgelegt werden. Der Strom der Wärmepumpe und der Strom des Betriebsmittels wird vorzugsweise aus einem Allgemeinstrom bezogen, der von allen Parteien einer Liegenschaft bezahlt wird.

Vorzugsweise kann es demnach hier aber auch vorgesehen sein, dass die Temperierung des den Heizkörper durchströmenden Heizmediums durch eine erste Primärenergiequelle erfolgt und die Änderung der Wärmeleistung der Heizvorrichtung mittels des wenigstens einen Betriebsmittels durch eine andere zweite Primärenergiequelle erfolgt.

Z.B. kann die erste Primärenergiequelle durch Gas oder Öl gebildet werden, das in einem Brenner verbrannt wird, um das Heizmedium zu temperieren.

Wird das Betriebsmittel z.B. mit Strom betrieben, insbesondere um eine aktive Beheizung des Heizmediums oder der Luft um den Heizkörper herum zu erzeugen, so kann auch die dafür aufgewendete Energie mit dem erfindungsgemäßen Heizkostenverteiler erfasst werden. Mit der Erfindung kann durch Akkumulierung in verschiedenen Registern mit dem Heizkostenverteiler auch der Verbrauch der Energie erfasst werden, der aus beiden verschiedenen Primärenergiequellen erfolgt.

Bei einem Heizkörper-internen Heizelement kann der Heizkostenverteiler den Verbrauch direkt über seine Temperatursensoren erfassen und bei festgestellter Bestromung des Heizelementes in einem zugeordneten Register akkumulieren und speichern.

Bei einer Luftheizung könnte die Stärke der Bestromung über die Größe des Zustandswertes erfasst werden und die Dauer der Bestromung über die Anzahl der Messintervalle, in welcher der Zustandswert erfasst wird. Es kann dann ein Register in Abhängigkeit des Zustandswertes und der erfassten Anzahl der Messintervalle gewählt werden.

Die Erfindung kann weiterhin vorsehen, dass im gespeicherten Regelwerk zur Ermittlung des Zählfortschritts der Zustandswert berücksichtigt wird.

Die Erfindung kann vorsehen, dass der Heizkostenverteiler den unbewerteten Zählfortschritt registriert. Insbesondere ist es dann vorgesehen, den an ein Abrechnungsunternehmen übermittelten Zählfortschritt extern vom Heizkostenverteiler mit wenigstens einem Bewertungsfaktor zu multiplizieren. Durch Multiplikation mit einem Bewertungsfaktor kann auch dem Zählfortschritt auch einen den Wärmeverbrauch repräsentierenden Wert geschlossen werden.

Die Erfindung kann auch vorsehen, dass der Zählfortschritt des jeweiligen Registers mit einem dem Register zugeordneten Faktor multipliziert wird, der die Wärmeleistung der Heizvorrichtung in Abhängigkeit des Zustandswertes repräsentiert. Hierdurch können z.B. aus den unbewerteten Zählfortschritten bewertete Zählfortschritte skaliert werden.

Hierbei kann vorzugsweise der jeweilige Faktor die Wärmeleistung, insbesondere die Normwärmeleistung, der Heizvorrichtung in Abhängigkeit des Zustandswertes bei einer vordefinierten temperaturabhängigen Betriebsbedingung repräsentieren, z.B. in Abhängigkeit einer bestimmten Vorlauf- und/oder Rücklauftemperatur. Der Faktor kann durch den bekannten Faktor Kq gegeben sein.

Es kann vorzugsweise vorgesehen sein, dass der Faktor für ein jeweiliges Register durch Berechnung im Heizkostenverteiler ermittelt wird und für die jeweilige Berechnung Werte genutzt werden, die während der Herstellung, während der Inbetriebnahme oder während des laufenden Betriebs zum Heizkostenverteiler ganz oder in Teilen in diesen übertragen werden.

Die Erfindung kann weiterhin bevorzugt vorsehen, dass zu jedem der mehreren Register ein für den zugeordneten Zustandswert spezifischer Bewertungsfaktor im Heizkostenverteiler gespeichert ist und in jedem Register ein mit dem Bewertungsfaktor bewerteter Zählfortschritt akkumuliert wird. Insbesondere kann so im Register direkt ein Wärme-Verbrauchsmesswert akkumuliert werden.

Bei einer Ausführung eines Betriebsmittels als Gebläse kann z.B. zu jedem der mehreren Register ein für die zugeordnete elektrische Gebläseleistung spezifischer Bewertungsfaktor im Heizkostenverteiler gespeichert sein und in jedem Register ein mit dem Bewertungsfaktor bewerteter Zählfortschritt akkumuliert werden, insbesondere ein Wärme-Verbrauchsmesswert akkumuliert werden.

Dies bietet den Vorteil, dass ein Nutzer direkt am Heizkostenverteiler Verbrauchsmesswerte ablesen kann, um sich unterjährig über die Verbräuche an dem jeweiligen Heizkörper selbst informieren zu können.

Alternativ kann lediglich zur späteren Abrechnung nach Auslesen der Registerstände der Zählerstand jedes Register mit einem dem Register zugeordneten Bewertungsfaktor durch Multiplikation bewertet werden. Dies kann auch extern in einer Abrechnungszentrale erfolgen. Seitens der Abrechnungszentralen kann dann eine unterjährige Information an die Nutzer der Heizkörper erfolgen.

Eine bevorzugte Ausführung der Erfindung sieht es vor, dass dem Heizkörper wenigstens ein Betriebsmittel mit mehreren Betriebszuständen, insbesondere mit einer vorbestimmten Anzahl von diskreten Betriebszuständen, zugeordnet ist/wird, die von der Beobachtungsgröße repräsentiert werden und der Heizkostenverteiler mit einer Anzahl von Registern von extern parametriert wird oder diese selbst anlegt, die größer oder gleich der Anzahl der sich aus den Betriebszuständen ergebenden Zustandswerte ist.

Beispielsweise kann dem Heizkörper ein Gebläse mit einer vorbestimmten Anzahl von diskret schaltbaren Leistungsstufen zugeordnet sein/werden und der Heizkostenverteiler wird mit einer Anzahl von Registern parametriert, die der Anzahl der Leistungsstufen des zugeordneten Gebläses entspricht.

Eine solche Parametrierung kann z.B. werksseitig oder bei der Erstinbetriebnahme im Feld durch einen Servicetechniker erfolgen. Durch die Parametrierung wird vorzugsweise der reservierte Speicherbereich in Register unterteilt.

Die Erfindung kann vorzugsweise auch vorsehen, dass dem Heizkörper wenigstens ein Betriebsmittel mit mehreren Betriebszuständen, insbesondere mit einer vorbestimmten Anzahl von diskreten Betriebszuständen, vorzugsweise aus einer Menge von Betriebsmitteln mit sich unterscheidender Anzahl möglicher Betriebszustände, zugeordnet ist/wird, wobei der Heizkostenverteiler die Anzahl der benötigten Register während des Betriebs ermittelt und in einem internen Speicherraum anlegt, insbesondere sukzessive.

Dies kann z.B. dadurch ausgebildet sein, dass dem Heizkörper ein Gebläse mit einer vorbestimmten Anzahl von diskret schaltbaren Leistungsstufen aus einer Menge von Gebläsen mit unterschiedlicher Anzahl von Leistungsstufen zugeordnet ist/wird.

In einem solchen Fall ist dem Heizkostenverteiler somit bei der Inbetriebnahme die Anzahl möglicher Betriebszustände nicht bekannt. Der Heizkostenverteiler beginnt vorzugsweise in einem solchen Fall mit der Akkumulierung des Zählfortschritts in einem ersten angelegten Register und hält vorzugsweise einen reservierten Speicherbereich vor, in dem weitere Register durch den Heizkostenverteiler selbst angelegt werden können, wenn dieser anhand der Erfassung der dem Betriebszustand repräsentierenden Beobachtungsgröße feststellt, dass der Heizkostenverteiler mit einem Sensor verbunden ist, der verschiedene Betriebszustände eines an einem Heizkörper betriebenen Betriebsmittels, z.B. Gebläses, detektiert oder zumindest detektieren kann.

Hierdurch erschließt sich vorzugsweise auch der Vorteil, dass nicht zwischen solchen Heizkostenverteilern unterschieden werden muss, die mit einem normalen Heizkörper zusammenarbeiten und solchen, die mit einem Heizkörper zusammenarbeiten, der in einer Heizvorrichtung mit einem Betriebsmittel zusammenwirkt, insbesondere bei dem die Konvektion mit einem Gebläse unterstützt ist.

Z.B. kann vorgesehen sein, dass ein erfindungsgemäßer Heizkostenverteiler eingerichtet ist, die Erfassung von Beobachtungsgrößen, wie z.B. die Messung von die Leistungsaufnahme repräsentierenden Messwerten, einzustellen oder gar nicht erst zu beginnen und nur mit einem ersten angelegten Register zu arbeiten, wenn an den Sensoreingang des Heizkostenverteiler kein Sensor zur Erfassung von Beobachtungsgrößen angeschlossen ist und der Heizkostenverteiler dies durch Abfrage der Sensormesswerte feststellt.

Eine bevorzugte Ausführung der Erfindung sieht es vor, dass bei kontinuierlich änderbaren Betriebszuständen eines Betriebsmittels, z.B. bei Drehzahlregelung eines Gebläses in Abhängigkeit der Temperatur der vom Gebläse angesaugten Raumluft, die sich kontinuierlich ändernden Beobachtungsgrößen in diskrete Zustandswerte oder direkt in diskrete Registeradressen gewandelt werden.

Z.B. kann hierfür verschiedenen Intervallbereichen, insbesondere verschiedenen aneinander angrenzenden Intervallbereichen der Messwerte einer Beobachtungsgröße, jeweils ein anderer Zustandswert zugeordnet werden oder es werden zunächst aus einer sich kontinuierlich ändernden Beobachtungsgröße ebenso kontinuierlich sich ändernde Zustandswerte gebildet, die anschließend diskretisiert werden, z.B. dadurch, dass verschiedenen Intervallbereichen, insbesondere verschiedenen aneinander angrenzenden Intervallbereichen von Zustandswerten, ein diskreter Zustandswert aus dem jeweiligen Intervall zugeordnet wird, z.B. ein Mittenwert oder ein Mittelwert der im betreffenden Intervall vorkommenden Zustandswerte. Es kann auch vorgesehen sein, sich kontinuierlich ändernde Beobachtungsgrößen oder Zustandswerte direkt in diskrete Registeradressen der zu verwendenden Register zu wandeln, wie es nachfolgend noch erläutert wird.

Die Erfindung kann es vorzugsweise vorsehen, dass dem Heizkostenverteiler eine vorbestimmte Anzahl von n Registern, insbesondere mit den Adressen 0 bis (n-1) oder 1 bis n zugeordnet wird. Dabei kann es vorgesehen sein, im Betrieb alle Register oder auch nur eine Anzahl von m ≤ n zu nutzen.

Weiter bevorzugt kann vorgesehen sein, dass die Anzahl der dem Heizkostenverteiler zugeordneten Register n oder die Anzahl m der benutzten Register aus einer Gesamtanzahl n von allen dem Heizkostenverteiler zugeordneten Registern während der Installation festgelegt wird.

Alternativ kann es vorgesehen sein, dass die Anzahl n der dem Heizkostenverteiler zugeordneten Register oder die Anzahl m der benutzten Register aus einer Gesamtanzahl n von allen dem Heizkostenverteiler zugeordneten Registern während der Betriebszeit des Heizkostenverteilers durch Diskretisierung der während der Betriebszeit auftretenden Beobachtungsgrößen oder Zustandswerte ermittelt wird.

Es kann vorzugsweise vorgesehen sein, dass im Heizkostenverteiler, insbesondere zur vorgenannten Diskretisierung, ein Faktor 1/a vorliegt, dessen Multiplikation mit der Beobachtungsgröße oder mit dem Zustandswert nach Rundung oder Streichung von Nachkommastellen eine natürliche Zahl oder 0 ergibt, die der Adresse des zu verwendenden Registers entspricht. Vorzugsweise wird somit in diesem Fall nicht die Beobachtungsgröße oder der Zustandswert diskretisiert, sondern direkt aus der Beobachtungsgröße oder dem Zustandswert eine diskrete Registeradresse gebildet.

Der Faktor 1/a kann z.B. manuell an den Heizkostenverteiler übermittelt werden oder aus einer Datenbank anhand des Modells des Heizkörpers und/oder des Modells des Betriebsmittels ermittelt und an den Heizkostenverteiler übermittelt werden. Z.B. kann für eine solche Übertragung der Heizkostenverteiler zumindest vorübergehend mit einer Datenbank verbunden werden, z.B. über ein Telekommunikationsnetzwerk.

Alternativ kann der Faktor 1/a vom Heizkostenverteiler selbst ermittelt werden aus der Differenz von zwei sich unterscheidenden Beobachtungsgrößen oder Zustandswerten, z.B. elektrische Leistungsaufnahmen von einem Gebläse, insbesondere die sich um ein vorbestimmtes Mindestmaß unterscheiden.

Der Wert a kann bei einer Ausbildung des Betriebsmittels als Gebläse oder als andere Vorrichtung, deren Betriebszustand sich mit unterschiedlichen elektrischen Leistungen ändert, z.B. einen Differenzwert bilden, welcher z.B. einer elektrischen Leistung entspricht, mit der sich verschiedene mögliche Betriebszustände, insbesondere elektrische Leistungen des Betriebsmittels, unterscheiden, insbesondere stufenweise.

Dieser Wert a kann als fix vergeben angenommen werden oder kann auch bei der Verfahrensdurchführung geändert werden, wenn der Heizkostenverteiler einen anderen Wert a konkret anhand der Messwerte des Sensors ermittelt. Dann kann es vorgesehen sein, dass der Heizkostenverteiler den zuvor parametrierten Wert a selbst überschreibt.

Unabhängig davon, wie der Wert a ermittelt ist, ist weiterhin vorgesehen, dass der Heizkostenverteiler den in einem Messintervall ermittelten Messwert der Beobachtungsgröße, z.B. der elektrischen Leistungsaufnahme, durch den Wert a dividiert und mit dem ganzzahligen Anteil des Ergebnisses oder dem Rundungswert die Ordnungsnummer desjenigen Registers bestimmt, in welches der Zählfortschritt des Messintervalls akkumuliert wird.

Hierfür wird jedem Register die vorgenannte Adresse oder Ordnungsnummer zugeordnet, insbesondere die auf den Speicherplatz des Registers im reservierten Speicherraum verweist. Es ist vorgesehen, dass der Speicherraum genügend groß ist, um die benötigte Anzahl Register anlegen zu können.

Ist die Adresse größer 1, so kann vorgesehen sein, dass unmittelbar eine der Adresse entsprechende Anzahl von Registern durch Speicherplatzzuweisung angelegt wird; ansonsten wird vorzugsweise zunächst nur ein Register angelegt/zugeordnet.

Es ist dann vorzugsweise vorgesehen, dass mit erstmaliger Ermittlung einer Adresse im internen Speicherraum ein Speicherplatzbereich dem Register dieser Adresse zugewiesen wird, in welchem die Zählfortschritte zu diesem Register akkumuliert werden. Der Heizkostenverteiler ist dabei vorzugsweise eingerichtet, diese Zuweisung selbsttätig vorzunehmen. Die zugeordneten Speicherplatzbereiche können vorzugsweise gemäß der Adresse nacheinander im Speicherraum sortiert sein; dies ist jedoch nicht zwingend nötig. Es kann auch vorgesehen sein, dass die zugeordneten Speicherplätze unabhängig von der konkreten Adresse in der Reihenfolge der erstmaligen Ermittlung einer Adresse nacheinander im Speicherraum dem jeweiligen Register zugeordnet werden.

Die Erfindung erschließt weiterhin den Vorteil, dass der Heizkostenverteiler aus dem Stromnetz mit Energie versorgt ist, insbesondere über eine Leitungsverbindung zum Sensor für die Erfassung der Beobachtungsgröße des wenigstens einen Betriebsmittels, z.B. der elektrischen Leistungsaufnahme eines Gebläses, insbesondere zumindest, wenn der Sensor kabelgebunden an den Heizkostenverteiler angeschlossen ist.

Erfindungsgemäß kann der Heizkostenverteiler auch einen Empfänger für andere Geräte oder ein Gateway zu anderen Geräten oder Kommunikationsnetzwerken in der Liegenschaft bilden, in welcher der Heizkostenverteiler verbaut ist oder auch ein Gateway zu anderen Geräten oder Kommunikationsnetzwerken (insbesondere öffentliche Kommunikationsnetzwerken) außerhalb der Liegenschaft bilden, insbesondere da genügend Energie für solche Aufgaben zur Verfügung steht.

Ausführungsbeispiele werden anhand der nachfolgenden Figuren erläutert.

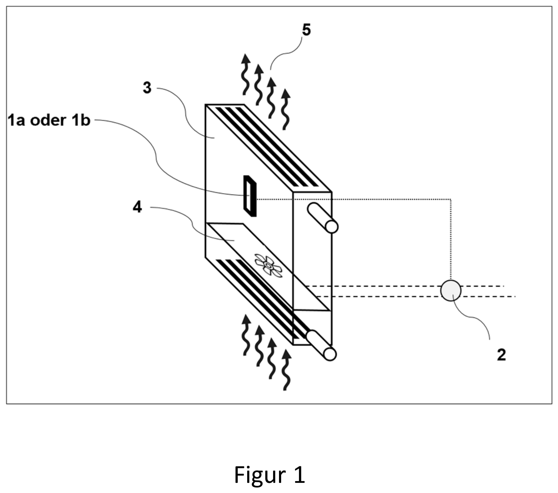

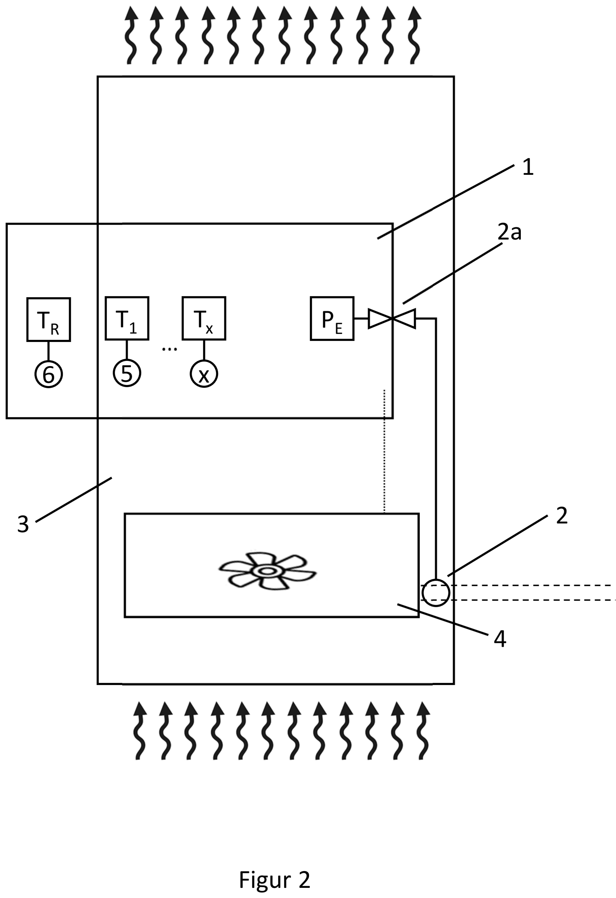

Die Figuren 1 und 2 zeigen ein System aus einem Heizkörper 3 mit einem Betriebsmittel 4, vorzugsweise einem elektrischen oder elektromechanischen Betriebsmittel 4, mit dem die Wärmeleistung der aus Heizkörper 3 und Betriebsmittel 4 gebildeten Heizvorrichtung änderbar ist. In dieser konkreten Darstellung ist das Betriebsmittel 4 durch ein Gebläse ausgebildet, insbesondere welches wenigstens einen Lüfter / Ventilator umfasst. Das System umfasst weiterhin einen Heizkostenverteiler mit wenigstens einem Temperatursensor zur Erfassung von Temperaturmesswerten.

Hier zeigt die Figur 2 eine detailliertere Ausbildung des Heizkostenverteilers 1, welcher wenigstens einen Temperatursensor 5, ggfs. mehrere Temperatursensoren 5,...,x umfasst, mit denen Temperaturen gemessen werden können, die am Heizkörper 3 vorliegen, z.B. auf der Heizkörperoberfläche, am Vorlaufanschluss oder am Rücklaufanschluss. Ein weiterer Temperatursensor 6 ist vorgesehen, um die Raumlufttemperatur zu erfassen.

Anhand der Temperaturmesswerte wird im Heizkostenverteiler in grundsätzlich bekannter Weise mittels eines implementierten Regelwerkes ein Zählfortschritt akkumuliert und gespeichert, mittels den man zu Abrechnungszwecken auf den relativen Wärmeverbrauch im Vergleich zu den akkumulierten Zählfortschritten anderer Heizkostenverteiler schließen kann. Ein solches Vorgehen ist grundsätzlich bekannt.

Das System umfasst hier einen Sensor 2, mit dem eine Beobachtungsgröße erfasst werden kann, welche einen Betriebszustand des Betriebsmittels 4 repräsentiert. In diesem konkreten Beispiel kann die Betriebsgröße ein Messwert sein, welcher die Leistungsaufnahme des an dem Heizkörper 3 angeordneten Gebläses repräsentiert.

Dieser Sensor 2 ist vorzugsweise in eine elektrische Versorgungsleitung eingebunden, mittels welcher das Betriebsmittel 4, hier das Gebläse, mit elektrischer Energie versorgt wird. Z.B. kann der Sensor in einer Steckdose, z.B. als Zwischensteckdose, angeordnet sein, in welche ein Stecker des Betriebsmittels 4 eingesteckt ist. Der Sensor ist vorzugsweise optisch, kapazitiv, galvanisch, induktiv, oder in einem einfachen Fall z.B. mittels eines Kabels oder über andere Kommunikationswege, z.B. drahtlos mit einem Sensoranschluss 2a, z.B. einer Schnittstelle, verbunden, die am Heizkostenverteiler für die Ankopplung des Sensors 2 vorgesehen ist. Die vom Sensor 2 erfasste Betriebsgröße kann so direkt im Heizkostenverteiler 1 ausgewertet und/oder weiterverarbeitet werden, z.B. mittels einer Recheneinheit eines Prozessors, der ein Programm ausführt, durch welches der Heizkostenverteiler 1 zur Ausführung des erfindungsgemäßen Verfahrens einrichtet ist.

Die an den Heizkostenverteiler 1 übermittelte und von diesem erfasste Betriebsgröße bildet vorzugsweise direkt einen Zustandswert oder wird in einen Zustandswert umgerechnet, welcher einen Betriebszustand der Heizvorrichtung, also der Einheit aus Betriebsmittel 4 und Heizkörper 3, repräsentiert.

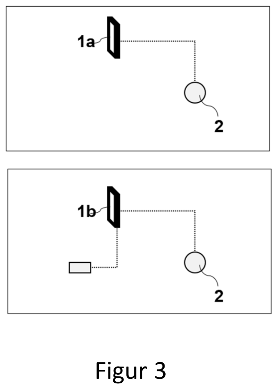

Gemäß Figur 3 kann der Heizkostenverteiler 1 in der Version 1a nur mit einem oder zwei oder mehreren internen Temperaturfühlern 5 arbeiten oder in der Version 1b mit wenigstens einem internen und einem externen Temperaturfühler. Vorzugsweise ist der externe Temperaturfühler der vorgenannte Temperaturfühler 6 zum Messen der Raumlufttemperatur.

Bei dem Heizkörper 3 bewirkt ein zusätzlicher Betrieb des Betriebsmittels 4, also des Gebläses, dass dessen Konvektion unterstützt ist, so dass dieser Heizkörper 3 keinen konstanten Bewertungsfaktor Kq hat, wie er von der üblichen DIN-konformen Betriebsweise eines Heizkostenverteilers bekannt ist, sondern der Heizkörper hat durch das Zusammenwirken mit dem Betriebsmittel 4 für jeden verschiedenen Betriebszustand, insbesondere für jede mögliche Leistungsaufnahme des Betriebsmittels, einen anderen Bewertungsfaktor.

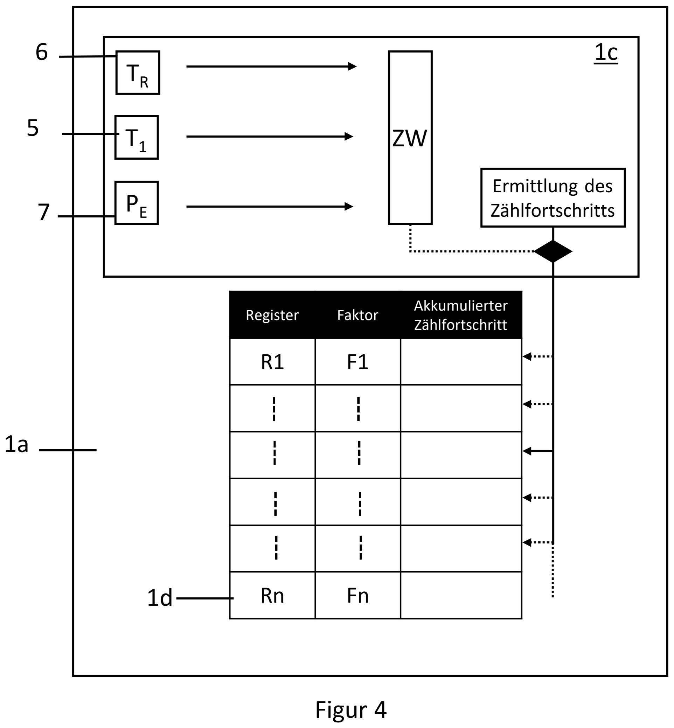

Die Figur 4 zeigt einen erfindungsgemäßen Heizkostenverteiler 1, 1a im Detail. Er hat in dieser Ausführung einen Temperatursensor 5 für die Oberflächentemperatur T1 des Heizkörpers 3 und einen internen Temperatursensor 6 für die Raumlufttemperatur TR. Dieser Temperatursensor 6 kann auch extern zum Gehäuse des Heizkostenverteilers 1 liegen.

Der Heizkostenverteiler würde dann der vorgenannten Ausführung 1b entsprechen.

Im Heizkostenverteiler 1 ist eine Recheneinheit 1c vorgesehen, die z.B. einen Prozessor umfasst, der ein gespeichertes Programm abarbeitet, um das erfindungsgemäße Verfahren durchzuführen und um in jedem Messintervall von mehreren aufeinander folgenden Messintervallen aus den Temperaturmesswerten T1, TR der Temperatursensoren 5 und 6 einen Zählfortschritt mittels eines hinterlegten Regelwerks zu bestimmen.

Es ist ebenfalls vorgesehen, dass in der Recheneinheit 1c erfindungsgemäß bei der Akkumulierung des Zählfortschritts die Beobachtungsgröße 7 zusätzlich berücksichtigt wird, die vom Sensor 2 bereitgestellt wird und z.B. die elektrische Leistungsaufnahme P_{E} des Betriebsmittels 4 repräsentiert.

Im erfindungsgemäßen Verfahren ist es vorgesehen, dass in jedem Messintervall wenigstens einmalig mit dem Sensor 2 die Beobachtungsgröße 7 erfasst wird, die allgemein vorzugsweise einer elektrischen oder elektromechanische Größe entspricht, und vorzugsweise die im Messintervall vorliegende aktuelle elektrische Leistungsaufnahme des Betriebsmittels 4 repräsentiert. Zusätzlich ist vorgesehen, dass aus der Beobachtungsgröße 7, sofern diese nicht unmittelbar einen Zustandswert bildet, welcher den Betriebszustand der Heizvorrichtung repräsentiert, ein Zustandswert ZW gebildet wird, z.B. aus der Beobachtungsgröße 7 und wenigstens einem der Temperaturwerte der Temperatursensoren.

Weiterhin gibt es einen reservierten internen Speicherraum 1d im Heizkostenverteiler 1, welcher erfindungsgemäß in mehrere Register R1, R2,....,Rn unterteilt ist oder zumindest unterteilbar ist, z.B. während der Verfahrensdurchführung.

In Abhängigkeit des Zustandswerts ZW wird bestimmt, in welches der Register R1,...., Rn der Zählfortschritt akkumuliert wird. Z.B. kann es dafür vorgesehen sein, den Zustandswert ZW in eine Adresse umzurechnen, z.B. mit anderen im Heizkostenverteiler 1 hinterlegten Werten, welche auf das für den vorliegenden Zustandswert ZW zu nutzenden Register R1,...., Rn verweist.

Dabei kann vorzugsweise, wie hier gezeigt, jedem Register R1,..., Rn auch ein individueller Faktor F1,...,Fn zugeordnet sein, welcher die jeweilige Wärmeleistung des Heizkörpers repräsentiert.

Dies kann zum einen die Wärmeleistung des Heizkörpers 3 in Abhängigkeit der Beobachtungsgröße bei vordefinierten temperaturabhängigen Betriebsbedingungen (Betrieb bei bestimmten Werten der Vor- /Rücklauf-/Raumluft-Temperatur z.B. 75/65/20°C) sein oder zum anderen die Wärmeleistung des Heizkörpers bei unterschiedlichen Größen des Zustandswerts ZW. In einem solchen Fall ist der Faktor F1-Fn bei den verschiedenen möglichen Betriebszuständen analog zu verstehen zu dem Faktor Kq, mit dem aus dem Zählfortschritt bei einer Normwärmeleistung des Heizkörpers 3 ein Wärmeverbrauch ermittelbar ist. Eine solche Zuordnung zwischen den Faktoren F1-Fn und den Registern R1-Rn muss nicht zwingend intern im Heizkostenverteiler 1 vorliegen, sondern kann auch beim externen Abrechnungsdienstleister gespeichert sein.

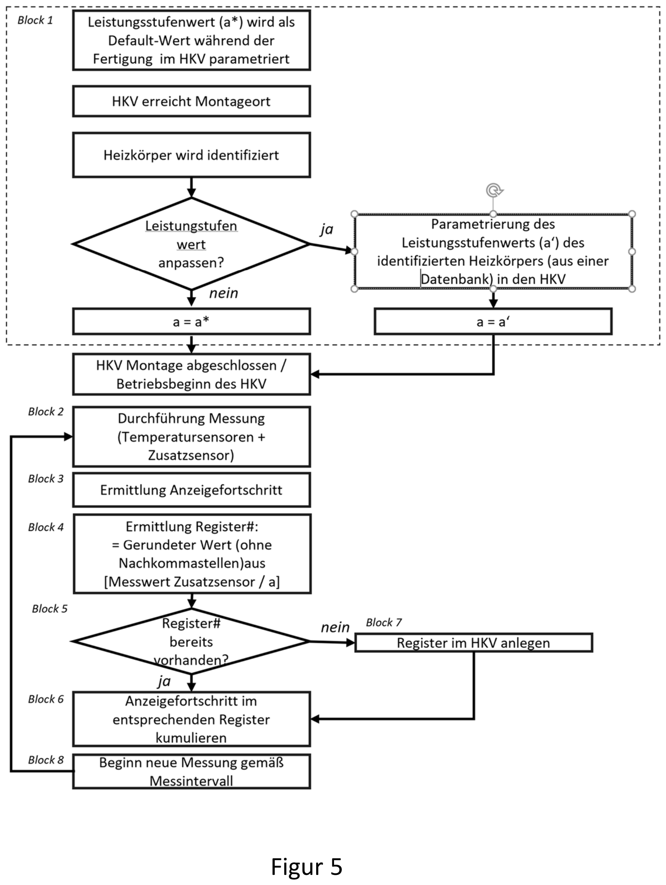

Die Figur 5 visualisiert das zuvor beschriebene Verfahren in einem Flussdiagramm am Beispiel eines Betriebsmittels 4, dessen Betriebszustände durch dessen mögliche Leistungsstufen gegeben sind, die von der Beobachtungsgröße repräsentiert wird, welche mit dem Sensor erfassbar ist.

Hier kommt der zuvor genannte Faktor 1/a zum Einsatz, dessen Parameter a initial als Vorgabe a* im Heizkostenverteiler 1 gespeichert sein kann oder der als Wert a' aus einer Datenbank geladen wird. In dem Fall, dass die Beobachtungsgröße eine elektrische Leistung repräsentiert, entspricht der Parameter a einem Leistungsstufenwert und ist dementsprechend im Flussdiagramm benannt. Dieser Leistungsstufenwert ist vorzugsweise diejenige Leistungsdifferenz, um die sich die Leistung des Betriebsmittels, z.B. des Gebläses, zwischen verschiedenen einstellbaren Stufen unterscheidet.

Anhand dieses Faktors wird im Block 4 aus dem Zustandswert, welcher dem Messwert des (Zusatz-) Sensors, also der Beobachtungsgröße direkt entsprechen kann, die Adresse des zu nutzenden Registers bestimmt, in welches der Zählfortschritt akkumuliert wird. Im Block 4 kann statt (Messwert Zusatzsensor / a) auch angegeben sein (Zustandswert ZW / a).

Dabei ist in dem visualisierten Flussdiagramm vorgesehen, dass die Register nicht bereits alle initial angelegt sind, sondern in Speicherraum des Heizkostenverteilers angelegt werden, wenn die Adresse eines zu nutzenden Registers erstmalig ermittelt wird. Dies ergibt sich hier in den Blöcken 5 und 7 des Flussdiagramms.

Im Flussdiagramm ist es nicht gezeigt, es kann aber vorgesehen sein, dass der Parameter a während der Verfahrensdurchführung geändert wird, z.B. wenn durch Messung der Beobachtungsgrößen festgestellt wird, dass die Differenz a zwischen verschiedenen Beobachtungsgrößen nicht dem aktuell genutzten Wert a entspricht.

## Patentansprüche

1. Verfahren zum Betrieb eines Heizkostenverteilers (1) an einem von einem Heizmedium durchströmten Heizkörper (3), der mit wenigstens einem am Heizkörper (3) angeordneten Betriebsmittel (4) eine Heizvorrichtung bildet, wobei mit dem wenigstens einen Betriebsmittel (4) die Wärmeleistung der Heizvorrichtung verändert wird,
a. wobei mit dem Heizkostenverteiler (1) mittels wenigstens eines Temperatursensors (5, 6) Temperaturmesswerte erfasst werden, vorzugsweise
i. wobei mit einem einzigen Temperatursensor (5) Temperaturmesswerte als Maß der Temperatur der Heizkörperoberfläche erfasst werden, oder
ii. wobei mit einem ersten Temperatursensor (5) Temperaturmesswerte als Maß der Temperatur der Heizkörperoberfläche und mit einem zweiten Temperatursensor (6) Temperaturmesswerte als Maß der Temperatur der Raumluft erfasst werden, oder
iii. wobei mit wenigstens zwei Temperatursensoren, insbesondere einem für die Vorlauftemperatur und einem für die Rücklauftemperatur, ein Maß für die mittlere Heizmediumtemperatur des Heizkörpers und mit einem weiteren Temperatursensor Temperaturmesswerte als Maß für die Temperatur der Raumluft erfasst werden,
b. und in aufeinanderfolgenden Messintervallen aus dem wenigstens einen im Messintervall erfassten Temperaturmesswert (5,6), vorzugsweise aus allen Temperaturmesswerten, anhand eines im Heizkostenverteiler (1) gespeicherten Regelwerks ein Zählfortschritt ermittelt und in einem Speicherbereich (1d) des Heizkostenverteilers (1) akkumuliert und gespeichert wird,
**dadurch gekennzeichnet, dass**
c. mittels wenigstens einem am Heizkostenverteiler (1) angeschlossenen und dem wenigstens einen Betriebsmittel (4) zugeordneten Sensor (2) in jedem Messintervall, insbesondere wenigstens einmal, wenigstens eine Beobachtungsgröße (7) erfasst wird, wobei die jeweilige Beobachtungsgröße (7) einen Betriebszustand des dem Sensor (2) zugeordneten Betriebsmittels (4) repräsentiert, und
d. ein Zustandswert (ZW) durch die wenigstens eine Beobachtungsgröße (7) gegeben ist oder aus der wenigstens einen Beobachtungsgröße (7) ermittelt wird, welcher den aktuellen Betriebszustand der Heizvorrichtung, insbesondere deren Wärmeleistung, repräsentiert, und
e. der Speicherbereich (1d) im Heizkostenverteiler (1) in mehrere Register (R1,...,Rn) unterteilt wird oder unterteilt ist, und
f. in Abhängigkeit des im Messintervall vorliegenden Zustandswerts (ZW) der im Messintervall ermittelte Zählfortschritt in einem von mehreren Registern (R1,...,Rn) des Heizkostenverteilers (1) akkumuliert und gespeichert wird.

2. Verfahren nach Anspruch 1, **dadurch gekennzeichnet, dass** der Zustandswert (ZW) aus der wenigstens einen Beobachtungsgröße (7) in Verbindung mit wenigstens einem im Messintervall vom Heizkostenverteiler (1) erfassten Temperaturmesswert gebildet wird.

3. Verfahren nach einem der vorherigen Ansprüche, **dadurch gekennzeichnet, dass** bei Änderung des Zustandswertes (ZW) innerhalb des Messintervalls, insbesondere bei Änderung des Zustandswertes (ZW) über ein vorbestimmtes Mindestmaß hinaus,
a. das aktuelle Messintervall des Heizkostenverteilers (1) abgeschlossen und ein neues begonnen wird, oder
b. aus allen innerhalb des Messintervalls ermittelten Zustandswerten (ZW) ein für das gesamte Messintervall geltender einziger Zustandswert (ZW) gebildet wird, insbesondere durch Bildung eines Mittelwerts aus allen innerhalb des Messintervalls ermittelten Zustandswerten (ZW).

4. Verfahren nach einem der vorherigen Ansprüche, **dadurch gekennzeichnet, dass** ein Betriebsmittel (4) gebildet wird durch:
a. eine Vorrichtung, mit welcher der durch und/oder an dem Heizkörper vorbei geführte Luftmassenstrom änderbar ist, insbesondere eine Vorrichtung mit wenigstens einem Gebläse und/oder eine Vorrichtung mit wenigstens einem den Strömungswiderstand des Luftmassenstroms beeinflussenden Element, insbesondere mit wenigstens einer Klappe, und/oder
b. eine Vorrichtung, mit welcher die Temperatur des im Heizkörper befindlichen Heizmediums änderbar ist, insbesondere ein in den Heizkörper eingebautes elektrisch betriebenes Heizelement, vorzugsweise eine Heizpatrone /ein Heizstab, und/oder
c. eine Vorrichtung, mit welcher die Temperatur der durch und/oder an dem Heizkörper vorbei geführten Luft änderbar ist, insbesondere eine elektrisch betriebenes Luftheizungselement, vorzugsweise ein Heizregister.

5. Verfahren nach einem der vorherigen Ansprüche, **dadurch gekennzeichnet, dass** mit dem wenigstens einen Sensor (2) als Beobachtungsgröße (7)
a. ein elektrischer Betriebsparameter des Betriebsmittels (4), vorzugsweise ein die elektrische Leistungsaufnahme (P_{E}) des Betriebsmittels (4) repräsentierender Messwert erfasst wird und/oder
b. ein den Massenstrom der Luft oder des Heizmediums repräsentierender Messwert erfasst, und/oder
c. ein eine mechanische Position eines Stellelements des Betriebsmittels (4) repräsentierender Messwert erfasst wird.

6. Verfahren nach einem der vorherigen Ansprüche, **dadurch gekennzeichnet, dass** in dem Zählfortschritt des Heizkostenverteilers (1) der Energieverbrauch aus der Primärenergiequelle erfasst wird, mit welcher das Heizmedium des Heizkörpers (3) erwärmt wird und der Energieverbrauch aus der Primärenergiequelle erfasst wird, mit welcher die Änderung der Wärmeleistung mittels des wenigstens einen Betriebsmittels (4) bewirkt wird.

7. Verfahren nach Anspruch 6, **dadurch gekennzeichnet, dass** die Temperierung des den Heizkörper (3) durchströmenden Heizmediums durch eine erste Primärenergiequelle erfolgt und
a. die Änderung der Wärmeleistung der Heizvorrichtung mittels des wenigstens einen Betriebsmittels (4) durch dieselbe erste Primärenergiequelle erfolgt, oder
b. die Änderung der Wärmeleistung der Heizvorrichtung mittels des wenigstens einen Betriebsmittels (4) durch eine andere zweite Primärenergiequelle erfolgt,

8. Verfahren nach einem der vorherigen Ansprüche, **dadurch gekennzeichnet, dass** im gespeicherten Regelwerk zur Ermittlung des Zählfortschritts der Zustandswert (ZW) berücksichtigt wird.

9. Verfahren nach einem der vorherigen Ansprüche, **dadurch gekennzeichnet, dass** der Heizkostenverteiler (1) den unbewerteten Zählfortschritt registriert.

10. Verfahren nach einem der vorherigen Ansprüche, **dadurch gekennzeichnet, dass** der Zählfortschritt des jeweiligen Registers (R1,...,Rn) mit einem dem Register (R1,...,Rn) zugeordneten Faktor (F1,...,Fn) multipliziert wird, der die Wärmeleistung der Heizvorrichtung in Abhängigkeit des Zustandswertes (ZW) repräsentiert.

11. Verfahren nach Anspruch 10, **dadurch gekennzeichnet, dass** der jeweilige Faktor (F1,...,Fn) die Wärmeleistung der Heizvorrichtung in Abhängigkeit des Zustandswertes (ZW) bei einer vordefinierten temperaturabhängigen Betriebsbedingung repräsentiert.

12. Verfahren nach einem der vorherigen Ansprüche 10 oder 11, **dadurch gekennzeichnet, dass** der Faktor (F1,...,Fn) für ein jeweiliges Register (R1,...,Rn) durch Berechnung im Heizkostenverteiler (1) ermittelt wird und für die jeweilige Berechnung Werte genutzt werden, die während der Herstellung, während der Inbetriebnahme oder während des laufenden Betriebs zum Heizkostenverteiler (1) ganz oder in Teilen in diesen übertragen werden.

13. Verfahren nach einem der vorherigen Ansprüche, **dadurch gekennzeichnet, dass** zu jedem der mehreren Register (R1,...,Rn) ein für den zugeordneten Zustandswert (ZW) spezifischer Bewertungsfaktor (F1,...,Fn) im Heizkostenverteiler (1) gespeichert ist und in jedem Register (R1,...,Rn) ein mit dem Bewertungsfaktor (F1,...,Fn) bewerteter Zählfortschritt akkumuliert wird, insbesondere ein Verbrauchsmesswert akkumuliert wird.

14. Verfahren nach einem der vorherigen Ansprüche, **dadurch gekennzeichnet, dass** dem Heizkörper (3) wenigstens ein Betriebsmittel (4) mit mehreren Betriebszuständen, insbesondere mit einer vorbestimmten Anzahl von diskreten Betriebszuständen zugeordnet ist/wird, die von der Beobachtungsgröße (7) repräsentiert werden und der Heizkostenverteiler (1) mit einer Anzahl von Registern (R1,...,Rn) von extern parametriert wird oder diese selbst anlegt, die größer oder gleich der Anzahl der sich aus den Betriebszuständen ergebenden Zustandswerte (ZW) ist.

15. Verfahren nach einem der vorherigen Ansprüche, **dadurch gekennzeichnet, dass** dem Heizkörper (3) wenigstens ein Betriebsmittel (4) mit mehreren Betriebszuständen, insbesondere mit einer vorbestimmten Anzahl von diskreten Betriebszuständen, vorzugsweise aus einer Menge von Betriebsmitteln (4) mit sich unterscheidender Anzahl der möglichen Betriebszustände zugeordnet ist/wird, wobei der Heizkostenverteiler (1) die Anzahl der benötigten Register (R1,...,Rn) während des Betriebs ermittelt und in einem internen Speicherraum (1d) anlegt, insbesondere sukzessive.

16. Verfahren nach Anspruch 14 oder 15, **dadurch gekennzeichnet, dass** bei kontinuierlich änderbaren Betriebszuständen eines Betriebsmittels (4) die sich kontinuierlich ändernden Beobachtungsgrößen (7) in diskrete Zustandswerte oder diskrete Registeradressen der Register (R1,...,Rn) gewandelt werden.

17. Verfahren nach einem der vorherigen Ansprüche, **dadurch gekennzeichnet, dass** dem Heizkostenverteiler eine vorbestimmte Anzahl von n Registern (R1,...,Rn), insbesondere mit den Adressen 0 bis (n-1) oder 1 bis n zugeordnet wird, vorzugsweise von denen im Betrieb eine Anzahl von m ≤ n benutzt wird.

18. Verfahren nach einem der vorherigen Ansprüche, **dadurch gekennzeichnet, dass** die Anzahl der dem Heizkostenverteiler (1) zugeordneten Register (R1,...,Rn) oder die Anzahl der benutzten Register (R1,...,Rm) aus einer Gesamtanzahl von allen dem Heizkostenverteiler (1) zugeordneten Registern (R1,...,Rn)
a. während der Installation festgelegt wird, oder
b. während der Betriebszeit des Heizkostenverteilers (1) durch Diskretisierung der während der Betriebszeit auftretenden Beobachtungsgrößen (7) oder Zustandswerte (ZW) ermittelt wird.

19. Verfahren nach einem der vorherigen Ansprüche, **dadurch gekennzeichnet, dass** im Heizkostenverteiler, insbesondere zur Diskretisierung nach Anspruch 16 oder 18, ein Faktor 1/a vorliegt, dessen Multiplikation mit der Beobachtungsgröße oder dem Zustandswert nach Rundung oder Streichung von Nachkommastellen eine natürliche Zahl oder 0 ergibt, die der Adresse des zu verwendenden Registers entspricht.

20. Verfahren nach Anspruch 19, **dadurch gekennzeichnet, dass** der Faktor 1/a
a. aus einer Datenbank anhand des Modells des Heizkörpers (3) und/oder des Modells des Betriebsmittels (4) ermittelt und an den Heizkostenverteiler (1) übermittelt wird, oder
b. vom Heizkostenverteiler (1) selbst ermittelt wird aus der Differenz von zwei sich unterscheidenden Beobachtungsgrößen (7) oder Zustandswerten (ZW), insbesondere die sich um ein vorbestimmtes Mindestmaß unterscheiden.

21. Verfahren nach einem der vorherigen Ansprüche, **dadurch gekennzeichnet, dass** der Heizkostenverteiler (1) aus dem Stromnetz mit Energie versorgt ist, insbesondere über eine Leitungsverbindung zum Sensor (2) für die Erfassung der Beobachtungsgröße (7) des wenigstens einen Betriebsmittels (4).

22. Verfahren nach einem der vorherigen Ansprüche, **dadurch gekennzeichnet, dass** der Heizkostenverteiler (1)
a. einen Empfänger für andere Geräte, oder
b. ein Gateway zu anderen Geräten oder Kommunikationsnetzwerken
in oder außerhalb einer Liegenschaft bildet, in welcher der Heizkostenverteiler (1) verbaut ist.

23. System mit einer Heizvorrichtung aus einem Heizkörper (3) und einem Betriebsmittel (4), vorzugsweise einem elektrischen oder elektromechanischen Betriebsmittel (4), mit dem die Wärmeleistung der Heizvorrichtung änderbar ist, und mit einem Heizkostenverteiler (1) mit wenigstens einem Temperatursensor (5, 6) zur Erfassung von Temperaturmesswerten, vorzugsweise
i. mit einem einzigen Temperatursensor (5) mit dem Temperaturmesswerte als Maß der Temperatur der Heizkörperoberfläche erfassbar sind, oder
ii. mit einem ersten Temperatursensor (5) mit dem Temperaturmesswerte als Maß der Temperatur der Heizkörperoberfläche erfassbar sind und mit einem zweiten Temperatursensor (6) mit dem Temperaturmesswerte als Maß der Temperatur der Raumluft erfassbar sind, oder
iii. mit wenigstens zwei Temperatursensoren, insbesondere einem für die Vorlauftemperatur und einem für die Rücklauftemperatur, mit denen ein Maß für die mittlere Heizmediumtemperatur des Heizkörpers erfassbar ist und mit einem weiteren Temperatursensor mit dem Temperaturmesswerte als Maß für die Temperatur der Raumluft erfassbar sind,
b. und mit einer Recheneinheit (1c), mit der in aufeinanderfolgenden Messintervallen aus den erfassten Temperaturmesswerten anhand eines gespeicherten Regelwerks ein Zählfortschritt ermittelbar und in einem Speicherbereich (1d) des Heizkostenverteilers (1) akkumulierbar und speicherbar ist,
**dadurch gekennzeichnet, dass**
c. am Heizkostenverteiler (1) wenigstens ein Sensor (2) angeschlossen ist, der dem wenigstens einen Betriebsmittel (4) zugeordnet ist mit dem in jedem Messintervall, insbesondere wenigstens einmal, eine Beobachtungsgröße (7) erfassbar ist, die den Betriebszustand des zugeordneten Betriebsmittels (4) repräsentiert, und
d. der Heizkostenverteiler (1) eingerichtet ist, die erfasste Beobachtungsgröße (7) als einen Zustandswert (ZW) zu übernehmen oder aus der Beobachtungsgröße (7) einen Zustandswert (ZW) zu bilden, welcher den aktuellen Betriebszustand der Heizvorrichtung, insbesondere deren Wärmeleistung, repräsentiert, und
e. der Heizkostenverteiler (1) eingerichtet ist in Abhängigkeit des im Messintervall ermittelten Zustandswerts (ZW) den im Messintervall erfassten Zählfortschritt in einem von mehreren im Speicherbereich (1d) angelegten oder anlegbaren Registern (R1,...,Rn) zu speichern, insbesondere gemäß einem Verfahren nach einem der vorherigen Ansprüche 1 bis 22.

24. System nach Anspruch 23, **dadurch gekennzeichnet, dass** das Betriebsmittel (4) und der zugeordnete Sensor (2) kapazitiv, induktiv oder galvanisch verbunden sind.

25. System nach Anspruch 23 oder 24, **dadurch gekennzeichnet, dass** der Sensor (2) eine Steckdose oder eine Kombination aus einem Stecker und einer Steckdose aufweist.

26. Heizkostenverteiler (1) umfassend wenigstens einen Temperatursensor (5, 6) zur Erfassung von Temperaturmesswerte, vorzugsweise
i. mit einem einzigen Temperatursensor (5) mit dem Temperaturmesswerte als Maß der Temperatur der Heizkörperoberfläche erfassbar sind, oder
ii. mit einem ersten Temperatursensor (5) mit dem Temperaturmesswerte als Maß der Temperatur der Heizkörperoberfläche erfassbar sind und mit einem zweiten Temperatursensor (6) mit dem Temperaturmesswerte als Maß der Temperatur der Raumluft erfassbar sind, oder
iii. mit wenigstens zwei Temperatursensoren, insbesondere einem für die Vorlauftemperatur und einem für die Rücklauftemperatur, mit denen ein Maß für die mittlere Heizmediumtemperatur des Heizkörpers erfassbar ist und mit einem weiteren Temperatursensor mit dem Temperaturmesswerte als Maß für die Temperatur der Raumluft erfassbar sind,
b. und mit einer Recheneinheit (1c) mit der in aufeinanderfolgenden Messintervallen aus den erfassten Temperaturmesswerten anhand eines gespeicherten Regelwerks ein Zählfortschritt ermittelbar und in einem Speicherbereich (1d) des Heizkostenverteilers (1) akkumulierbar und speicherbar ist,
**dadurch gekennzeichnet, dass**
c. der Heizkostenverteiler (1) wenigstens einen Sensoranschluss (2a) aufweist, an den ein Sensor (2) angeschlossen oder zumindest anschließbar ist, mit dem in jedem Messintervall eine Beobachtungsgröße (7) eines dem Sensor (2) zuordenbaren Betriebsmittels (4) erfassbar ist, die den Betriebszustand des Betriebsmittels (4) repräsentiert,
d. und der Heizkostenverteiler (1) eingerichtet ist, die erfasste Beobachtungsgröße (7) als einen Zustandswert (ZW) zu übernehmen oder aus der Beobachtungsgröße (7) einen Zustandswert (ZW) zu bilden, insbesondere welcher den aktuellen Betriebszustand eines Systems repräsentiert, welches mit dem Heizkostenverteiler (1), einem Heizkörper (3) und wenigstens einem dem Heizkörper (3) zugeordneten Betriebsmittel (4) bildbar ist,
e. und im Speicherbereich (1d) des Heizkostenverteilers (1) eine Mehrzahl von Registern (R1,...,Rn) eingerichtet oder zumindest einrichtbar ist,
f. und der Heizkostenverteiler (1) eingerichtet ist bei vorliegenden verschiedenen Zustandswerten (ZW) den im Messintervall erfassten Zählfortschritt in Abhängigkeit des im Messintervall erfassten Zustandswertes (ZW) in unterschiedlichen Registern (R1,...,Rn) zu speichern.
